# FASCICULE DE BREVET EUROPEEN

(11) **EP 2 254 729 B1**
(45) Date de publication et mention de la délivrance du brevet: **02.11.2011**
(21) Numéro de dépôt: 09728172.9
(22) Date de dépôt: 17.03.2009
(51) Int. Cl.: B23P 15/02, F01D 5/18, B21K 3/04

(54) **PROCÉDÉ DE FABRICATION D'UNE AUBE CREUSE**
VERFAHREN ZUR HERSTELLUNG EINER HOHLSCHAUFEL
METHOD FOR MANUFACTURING HOLLOW BLADE

(30) Priorité: 25.03.2008 FR 0801598
(43) Date de publication de la demande: 01.12.2010
(73) Titulaire: Snecma, 75015 Paris (FR)
(72) Inventeur: BERTRAND, Françoise, F-91220 Bretigny sur Orge (FR); DUCLOS, Guillaume, F-77550 Moissy Cramayel (FR); FRANCHET, Jean-Michel, Patrick, Maurice, F-75018 Paris (FR); MOLINARI, Olivier, Michaël, F-77210 Avon (FR)
(74) Mandataire: Ramey, Daniel
(86) Numéro de dépôt international: PCT/FR2009/000276
(87) Numéro de publication internationale: WO 2009/122040

(56) Documents cités:
- EP-A- 1 481 754
- GB-A- 954 789
- US-A- 2 312 094
- US-A- 4 148 129

## Description

La présente invention concerne un procédé de fabrication d'une aube creuse de turbomachine selon le préambule de la revendication 1. Un tel procédé est connu du document EP 1 148 754.

Dans une turbomachine, les aubes fixes ou bien mobiles sont destinées à être placées dans une veine de circulation d'un flux d'air. Afin de réduire la masse de la turbomachine, il a déjà été proposé d'utiliser des aubes en matériaux composites. Cependant, ces matériaux sont très coûteux et les aubes sont techniquement difficiles à réaliser. Une autre solution consiste à alléger l'aube en y formant des cavités internes. Pour cela, des canaux sont formés dans une ébauche de l'aube puis remplis par des inserts d'une matière différente de celle de l'aube. Une étape de forgeage, consistant à appliquer une force mécanique à l'ébauche munie des inserts, permet de déformer l'ébauche pour lui donner la forme finale d'une aube de turbomachine. Les inserts sont enfin éliminés par dissolution chimique, les aubes ainsi obtenues étant à la fois légères et résistantes aux contraintes mécaniques.

Le choix de l'insert est particulièrement critique puisque celui-ci doit impérativement satisfaire à une double exigence concernant ses propriétés mécaniques et ses propriétés chimiques. En effet, lors de l'opération de forgeage, l'ébauche étant chauffée pour permettre sa déformation mécanique, la température de fusion des inserts doit être plus grande que la température de forgeage. De plus, le comportement rhéologique des inserts doit être suffisamment proche de celui de l'ébauche, à la température et aux vitesses de déformation considérées, pour obtenir la forme et la répartition des cavités internes souhaitées au sein de l'aube et éviter soit l'écrasement trop important des inserts soit la formation de fissures internes dans l'aube. En effet, si l'insert est trop mou lors de l'opération de forgeage, les cavités remplies des inserts vont s'écraser, et a contrario si l'insert est trop dur, des criques peuvent se former au sein de l'aube à l'interface insert / aube, ce qui fragilise l'aube et limite sa durée de vie.

Cette technique est utilisable pour la fabrication d'aubes creuses en alliage de titane, avec des inserts en acier. Toutefois, ces alliages de titane sont coûteux et leur utilisation ne se justifie que lorsque les aubes sont soumises à des contraintes mécaniques importantes et/ou des températures élevées.

L'invention a pour objet un procédé permettant de fabriquer des aubes creuses qui soient légères et peu coûteuses.

Elle propose à cet effet, un procédé de fabrication d'une aube creuse pour turbomachine consistant à former des canaux dans une ébauche de l'aube, à placer des inserts dans les canaux, à soumettre l'ébauche à un forgeage et à éliminer les inserts par dissolution chimique, **caractérisé en ce que** l'aube est en alliage d'aluminium et les inserts en alliage de cuivre.

L'utilisation d'aluminium en combinaison avec du cuivre permet, lors du forgeage de l'ébauche d'aube et des inserts, d'obtenir la déformation souhaitée puisque le cuivre a un comportement rhéologique similaire à celui de l'aluminium aux températures requises pour le forgeage de l'aluminium.

Les inserts en cuivre déformés par l'opération de forgeage sont ensuite dissous par trempage dans une solution d'acide nitrique.

Selon une autre caractéristique de l'invention, l'aube comprend, après dissolution chimique, au moins un canal formé dans son épaisseur et s'étendant sensiblement sur toute sa longueur suivant le profil extérieur de l'aube.

Selon une autre caractéristique de l'invention, l'aube est recouverte, avant élimination des inserts, d'un film de protection résistant à la dissolution chimique, les inserts restants libres de tout film de protection.

Si la solution utilisée pour la dissolution chimique n'est prévue que pour éliminer les inserts en cuivre, il est préférable d'en protéger l'aube en alliage d'aluminium. On peut utiliser pour cela une cire, un vernis ou un matériau adhésif résistant à l'agent chimique de dissolution des inserts.

Selon une autre caractéristique de l'invention, l'ébauche d'aube est réalisée par forgeage à plat d'aluminium, puis les canaux sont formés dans l'ébauche par perçage de celle-ci.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une vue en perspective d'une aube creuse réalisée par forgeage selon l'invention et présentant un pluralité de canaux ;
- la figure 2 est une vue schématique en coupe transversale d'une variante de l'aube creuse présentant un unique canal.

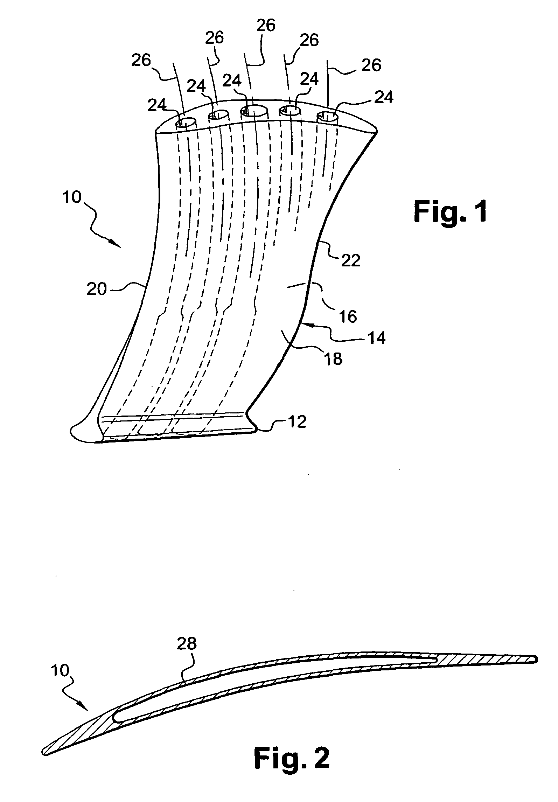

On se réfère tout d'abord à la figure 1 qui représente une aube creuse 10 de turbomachine obtenue par le procédé selon l'invention. Une telle aube 10 comporte un pied 12 raccordé à une pale 14, dont les surfaces extérieures appelées extrados 16 et intrados 18 sont reliées par un bord d'attaque 20 et un bord de fuite 22. Le pied 12 est destiné à être engagé dans une rainure correspondante d'un disque (non représenté) de rotor de la turbomachine tandis que la pale 14 est destinée à être placée dans la veine d'écoulement d'un flux d'air froid de la turbomachine.

Le procédé selon l'invention permet de réaliser une aube 10 telle que représentée en figure 1, qui est légère et résistante. Pour cela, le procédé propose d'utiliser une aube 10 en alliage d'aluminium et de réaliser les parties creuses 24 en utilisant des inserts en alliage de cuivre.

Le procédé consiste à réaliser par perçage des canaux dans une ébauche d'aube en aluminium.

Pour des raisons de coût, l'ébauche d'aube est préférentiellement réalisée par forgeage à plat d'un bloc d'aluminium. Cependant, d'autres techniques, telles que l'usinage, peuvent être utilisées pour réaliser l'ébauche.

Des inserts en cuivre de forme sensiblement identique à celle des canaux sont ensuite introduits dans les canaux. L'ébauche en aluminium pourvue des inserts est ensuite chauffée à une température d'environ 400°C et déformée par des techniques de forgeage connues de l'homme du métier, afin d'obtenir la forme d'aube 10 souhaitée.

Durant la déformation à chaud, les comportements rhéologiques sensiblement similaires du cuivre et de l'aluminium assurent l'obtention de la forme et de la répartition souhaitées des inserts au sein de l'aube 10 sans anomalies aux interfaces aluminium / cuivre. Après forgeage, les inserts s'étendent le long de lignes courbes 26 correspondant au profil de l'aube 10.

Les canaux et les inserts ont initialement une forme cylindrique droite à section circulaire, qui devient incurvée à section elliptique après forgeage.

Les inserts en cuivre sont ensuite dissous par trempage dans une solution à base d'acide nitrique. Une telle solution présente l'avantage de dissoudre préférentiellement l'élément cuivre par rapport à l'alliage d'aluminium et donc uniquement les inserts. La dissolution des inserts peut aussi être obtenue en dirigeant des jets d'acide nitrique en direction de chacun des emplacements des inserts.

Afin de garantir une protection optimale de l'aube 10, un film de protection est déposé sur l'aube de manière à la recouvrir, à l'exception des emplacements correspondant aux inserts en cuivre afin de permettre leur dissolution.

Le film de protection peut être de la cire ou un vernis ou bien un film adhésif, par exemple.

L'aube ainsi obtenue peut comprendre une pluralité de cavités ou de canaux s'étendant chacun sensiblement le long d'une ligne centrale courbe 26, suivant le profil de l'aube 10 de manière à ce que les cavités et canaux ne débouchent ni sur les surfaces d'extrados 16 et d'intrados 18, ni sur les bords d'attaque 20 et de fuite 22. Les canaux peuvent être débouchants à la fois à l'extrémité radialement externe de la pale et au niveau du pied d'aube ou bien être débouchants seulement au niveau du pied d'aube ou à l'extrémité radialement externe de la pale. Les épaisseurs de matière entourant les cavités sont variables et résultent d'un compromis entre l'allègement de l'aube et sa résistance mécanique, et sont, par exemple, de l'ordre de deux millimètres.

Les cavités ou canaux 24 peuvent présenter une section transverse non constante le long de la ligne centrale courbe afin d'avantageusement adapter leur diamètre à l'épaisseur locale de l'aube 10, de manière à obtenir une réduction optimale de la masse de l'aube 10. De même, il est possible que les sections des canaux 24 varient dans une direction transversale de manière à avoir des sections plus importantes au centre de l'aube 10 où l'épaisseur est la plus grande et des sections moins importantes vers le bord de fuite 22 et le bord d'attaque 20.

Il est également possible de réaliser un unique canal 28, ce qui permet d'obtenir un gain de masse encore plus important (figure 2).

Avantageusement, l'utilisation d'aubes creuses 10 selon l'invention permet de diminuer d'environ 20 % la masse d'un étage d'aubes fixes de turbomachine.

Dans un exemple particulier de réalisation de l'invention, les aubes 10 sont en alliage d'aluminium et de zinc et les inserts présentent une teneur en cuivre supérieure à 99,90 %, la solution chimique de dissolution présentant un rapport du volume d'une solution d'acide nitrique à 68 % sur le volume d'eau compris entre 25 et 80%. La température de la solution de dissolution est comprise entre 20 et 60°C.

Le procédé selon l'invention peut être utilisé aussi bien pour des aubes mobiles que pour des aubes fixes dans les différentes sections d'une turbomachine, en particulier celles ou passent des gaz froids ou à température peu élevée.

Ainsi, dans le cas d'un turboréacteur à double flux, les aubes fixes de guidage du flux d'air secondaire circulant autour du moteur peuvent être réalisées en aluminium creux en utilisant le procédé selon l'invention.

## Revendications

1. Procédé de fabrication d'une aube creuse (10) pour turbomachine consistant à former des canaux (24) dans une ébauche de l'aube, à placer des inserts dans les canaux (24), à soumettre l'ébauche à un forgeage et à éliminer les inserts par dissolution chimique, **caractérisé en ce que** l'aube (10) est en alliage d'aluminium et les inserts en alliage de cuivre.

2. Procédé selon la revendication 1, **caractérisé en ce que** la dissolution chimique est réalisée par trempage dans une solution d'acide nitrique.

3. Procédé selon la revendication 1 ou 2, caractérisé en ce l'aube (10) comprend, après dissolution chimique, un ou plusieurs canaux (24) formés dans son épaisseur et s'étendant sur toute sa longueur suivant le profil extérieur de l'aube (10).

4. Procédé selon l'une des revendications 1 à 3, **caractérisé en ce que** l'aube (14) est recouverte, avant élimination des inserts, d'un film résistant à la dissolution chimique, les inserts restants libres de tout film de protection.

5. Procédé selon l'une des revendications précédentes, **caractérisé en ce que** l'ébauche d'aube est réalisée par forgeage à plat d'aluminium, puis des canaux (24) sont formés dans l'ébauche par perçage de celle-ci.

## Claims

1. Method for manufacturing a hollow blade (10) for turbomachine consisting in forming channels (24) in a blank of the blade, in placing inserts in the channels (24), in subjecting the blank to forging and in eliminating the inserts by chemical dissolution, **characterized in that** the blade (10) is made from aluminum alloy and the inserts from copper alloy.

2. Method according to claim 1, **characterized in that** the chemical dissolution is realized by soaking in a nitric acid solution.

3. Method according to claim 1 or 2, **characterized in that** the blade (10) comprises, after chemical dissolution, one or several channels (24) formed in its thickness and extending over its entire length according to the exterior profile of the blade (10).

4. Method according to one of claims 1 to 3, **characterized in that** the blade (14) is covered, before elimination of the inserts, with a film that is resistant to the chemical dissolution, the inserts retaining free of any protective film.

5. Method according to one of the preceding claims, **characterized in that** the blade blank is realized via aluminum flat forging, then channels (24) are formed in the blank by drilling the latter.

## Patentansprüche

1. Verfahren zum Herstellen einer Hohlschaufel (10) für eine Turbo-bzw. Strömungsmaschine, das darin besteht, in einen Schaufelrohling Kanäle (24) einzubringen, in die Kanäle (24) Einsätze einzuführen, den Rohling einem Schmiedevorgang zu unterziehen und die Einsätze durch chemische Auflösung abzubauen, **dadurch gekennzeichnet, dass** die Schaufel (10) aus einer Aluminiumlegierung und die Einsätze aus einer Kupferlegierung bestehen.

2. Verfahren nach Anspruch 1, **dadurch gekennzeichnet, dass** die chemische Auflösung durch Eintauchen in eine Salpetersäurelösung erfolgt.

3. Verfahren nach Anspruch 1 oder 2, **dadurch gekennzeichnet, dass** die Schaufel (10) nach der chemischen Auflösung einen oder mehrere Kanäle (24) aufweist, die in ihre Materialdicke eingebracht sind und sich über ihre gesamte Länge entlang des Außenprofils der Schaufel (10) erstrecken.

4. Verfahren nach einem der Ansprüche 1 bis 3, **dadurch gekennzeichnet, dass** die Schaufel (14) vor dem Abbau der Einsätze mit einer Folie bedeckt wird, die gegenüber der chemischen Auflösung beständig ist, wobei die Einsätze frei von jeglicher Schutzfolie bleiben.

5. Verfahren nach einem der vorangehenden Ansprüche, **dadurch gekennzeichnet, dass** der Schaufelrohling durch Querschmieden von Aluminium hergestellt wird, wonach die Kanäle (24) durch Aufboluen des Rohlings in diesen eingebracht werden.
